# EUROPÄISCHE PATENTSCHRIFT

(11) **EP 4 523 845 B1**
(45) Veröffentlichungstag und Bekanntmachung des Hinweises auf die Patenterteilung: **08.07.2026**
(21) Anmeldenummer: 23197920.4
(22) Anmeldetag: 18.09.2023
(51) Int. Cl.: B23Q 7/10, B25H 3/06, B65D 19/44, B65D 25/10, B65G 1/14

(54) **AUFNAHMEMAGAZIN FÜR WERKSTÜCKE**
STORAGE MAGAZINE FOR WORKPIECES
MAGASIN DE STOCKAGE POUR PIÈCES À USINER

(43) Veröffentlichungstag der Anmeldung: 19.03.2025
(73) Patentinhaber: Lorenscheit, Thomas, 29490 Neu Darchau (DE); Lorenscheit, Nadine, 29490 Neu Darchau (DE)
(72) Erfinder: Lorenscheit, Thomas, 29490 Neu Darchau (DE); Lorenscheit, Nadine, 29490 Neu Darchau (DE)
(74) Vertreter: Raffay & Fleck

(56) Entgegenhaltungen:
- EP-A2- 0 309 444
- CN-A- 107 498 366
- DE-U1- 29 500 107
- US-A1- 2012 240 827

## Beschreibung

Die Erfindung betrifft ein Aufnahmemagazin für die Aufnahme einer Vielzahl von, insbesondere gleichen, Werkstücken in einem Werkstückbearbeitungsprozess mit den Merkmalen des Oberbegriffs des Anspruchs 1. Sie betrifft ferner eine Bearbeitungsstation für die, insbesondere spanabhebende, Bearbeitung von Werkstücken, die ein solches Aufnahmemagazin enthält.

In der Fertigung ist es bekannt, Werkstücke in Werkstückbearbeitungsmaschinen Bearbeitungsprozessen zu unterziehen, um aus Rohlingen oder Teilfertigprodukten, gegebenenfalls mit sukzessive durchgeführten Bearbeitungsprozessen an unterschiedlichen Werkstückbearbeitungsmaschinen, schließlich ein Fertigteil zu erhalten. Hier werden unterschiedliche Werkstückbearbeitungsmaschinen eingesetzt, insbesondere auch spanabhebende, zum Beispiel Mehrachsdrehmaschinen, Fräsmaschinen, Schleifmaschinen und dergleichen. In diesen Werkstückbearbeitungsmaschinen wird typischerweise je ein Werkstück pro Bearbeitungsdurchlauf bearbeitet, wobei dieses Werkstück in einer vorbestimmte Position in die Werkstückbearbeitungsmaschine eingebracht werden muss, typischerweise dort in einer entsprechenden Aufspannvorrichtung aufgespannt werden muss und nach dem Bearbeitungsprozess einem Bearbeitungsraum der Werkstückbearbeitungsmaschine, in dem es zuvor positioniert oder aufgespannt worden ist, wieder entnommen werden muss.

Zumeist werden dabei in der Fertigung nicht einzelne und individuelle Werkstücke gesondert und mit einem individuellen Ablauf bearbeitet, sondern es werden Serienbearbeitungen vorgenommen, teilweise in Kleinserien, teilweise aber auch in Großserien, in denen gleichartige Werkstücke in der Werkstückbearbeitungsmaschine zeitlich aufeinanderfolgend mit einem gleich verlaufenden Bearbeitungsprozess bearbeitet werden, zum Beispiel in einer gleichartigen Weise konturgebend spanabhebend bearbeitet. Hierfür ist es erforderlich, in einem bestimmten Takt wiederkehrend ein Werkstück in den Bearbeitungsraum der Werkstückbearbeitungsmaschine einzubringen, dort zu positionieren oder aufzuspannen, das Werkstück nach erfolgter Bearbeitung wieder aus dem Bearbeitungsraum der Werkstückbearbeitungsmaschine zu entnehmen und sodann ein nachfolgend zu bearbeitendes Werkstück einzusetzen usw. Um hier den gesamten Bearbeitungsablauf hinsichtlich einer Maximierung des Durchsatzes zu optimieren sind verschiedene Maßnahmen erdacht worden und werden in modernen Bearbeitungsprozessen ergriffen.

So werden im Bereich der Bearbeitungsmaschine zu bearbeitende Werkstücke in einer größeren Anzahl bereitgestellt, die dann zügig in einem Beladeprozess in den Bearbeitungsraum der Werkstückbearbeitungsmaschine eingebracht werden können, sodass hier keine Tot- oder Wartezeiten entstehen. Die Bereitstellung der Werkstücke erfolgt typischerweise in Aufnahmemagazinen, die tableauartig auf einer Einrichtung im Bereich der Werkstückbearbeitungsmaschine angeordnet sind und auf denen noch zu bearbeitende sich also in einer Wartestellung befindliche Werkstücke geordnet positioniert sind. Je nach der Form der Werkstücke und der Art der Überführung in den Bearbeitungsraum der Werkstückbearbeitungsmaschine können hier zum Beispiel Werkstücke stapelartig übereinander angeordnet sein. Vielfach sind die Werkstücke aber auch in einer Art Matrix spalten- und zeilenweise über- bzw. nebeneinander angeordnet.

Auch für aus dem Bearbeitungsraum entnommene Werkstücke können derartige Aufnahmemagazine vorgesehen sein, sodass dort die nach dem Bearbeitungsprozess entweder fertigen oder anschließend einer weiteren Bearbeitung zuzuführenden Werkstücke in einer geordneten Ablage befindlich sind und insbesondere, für den Fall, dass sie weiter zu bearbeiten sind, einer anderen Werkstückbearbeitungsmaschine zugeführt werden können.

Weiterhin werden für eine Automatisierung und eine damit einhergehende Abkürzung des Bearbeitungsablaufes vermehrt Roboter, seien dies herkömmliche Industrieroboter oder aber auch kollaborativ arbeitende Roboter, sogenannte Cobots, eingesetzt, die den eigentlichen Beschickungs- und/oder Entladungsprozess übernehmen, die also in einem Aufnahmemagazin vorrätig gehaltene Werkstücke jeweils einzelnen ergreifen und in den Bearbeitungsraum der Bearbeitungsmaschine überführen und dort positionieren oder an eine Aufspannung übergeben und die gegebenenfalls nach erfolgter Bearbeitung das bearbeitete Werkstück im Bearbeitungsraum ergreifen, aus dem Bearbeitungsraum herausführen und in einer bereitgestellten Ablage, zum Beispiel einem weiteren Aufnahmemagazin, geordnet ablegen. Ein Maschinenführer muss dann lediglich noch den Prozess beaufsichtigen und bei möglicherweise auftretenden Störungen eingreifen, und er muss dafür Sorge tragen, dass in der Warteposition in dem Aufnahmemagazin immer wieder noch zu bearbeitende Werkstücke bevorratet sind, die der Roboter dann ergreifen und automatisch händeln und der Werkstückbearbeitungsmaschine zuführen kann, bzw. dass entnommene Werkstücke nach der Bearbeitung abgeleitet und der weiteren Bestimmung zugeführt werden, sei dies eine weitere Bearbeitung an einer anderen Werkstückbearbeitungsmaschine oder sei dies dann die weitere Logistik, wenn das Werkstück fertig bearbeitet ist oder aber für eine weitere Nutzung, sei dies auch eine weitere Bearbeitung, in den Versand gehen soll.

Insbesondere dann, wenn mit einer Werkstückbearbeitungsmaschine nicht im Rahmen einer durchgehenden Serienproduktion fortwährend immer wieder gleiche Werkstücke, die gleiche Abmessungen und Geometrie aufweisen, zu bearbeiten sind, sondern aufeinanderfolgend unterschiedliche Kleinserienbearbeitungen stattfinden, bei denen die zu bearbeitenden Werkstücke in ihren Geometrien und/oder Dimensionen variieren, besteht nun ein Bedürfnis, die Aufnahmemagazine variabel einrüsten und an die jeweiligen Geometrien und Dimensionen der Werkstücke so anpassen zu können, dass die Werkstücke dort definiert und positionsgetreu angeordnet und gehalten werden können.

Ein Vorschlag, ein solches variables Aufnahmemagazin zu gestalten ist in der EP 2 314 414 A1 offenbart und beschrieben. Das dort beschriebene Aufnahmemagazin umfasst einen ebenen Ablageboden, der in einer matrixartigen und rastermäßig gebildeten Anordnung Bohrungen aufweist, in die Einsteckstifte (Pins) eingesetzt werden können. Diese Einsteckstifte bilden dann Anlagerpunkte für Werkstücke, sodass mit einer unterschiedlichen Bestückung des Auflagebodens mit Einsteckstiften in unterschiedlichen Abständen kleinere oder größere Partitionen oder Nester erhalten werden können, an denen bzw. in denen ein Werkstück mit einer vorgegebenen Anlage, nämlich einer Anlage an den Außenumfängen jeweils benachbarter Einsteckstifte, angeordnet werden können. Wenn nun also im Zuge eines Wechsels der vorzunehmenden Bearbeitung in der Werkstückbearbeitungsmaschine die Maschine und der Prozess auf andere und anders geformte bzw. dimensionierte Werkstücke umzurüsten ist, erfolgt dies in Bezug auf die Einstellung des Aufnahmemagazins durch einen Mitarbeiter, der die Einsteckstifte entsprechend in den Bohrungen so neu verteilt, dass die so gebildeten Aufnahmepartitionen oder Nester an die in dem neu eingerichteten Prozess zu bearbeitenden Werkstücke angepasst sind.

Wenngleich die bekannte Lösung bereits die erwünschte Flexibilität in der Einrichtung und Umrüstung des Aufnahmemagazins mit sich bringt, verbleiben hier dennoch Nachteile und Probleme. So erfordert ein Ein- bzw. Umstecken der Einsteckstifte einen vergleichsweise hohen Aufwand. Eine Bedienperson muss für jeden einzelnen Einsteckstift in ein für die Einrichtung des Aufnahmemagazins entsprechend dem aufzunehmenden Werkstücktyp vorgesehenes Bohrloch einbringen und darin festlegen, bzw. muss beim Umrüsten auch die zuvor in anderen Bohrlöchern angeordneten Einsteckstifte entnehmen, diese gegebenenfalls in ein neues Bohrloch versetzen. Dies bedingt einen vergleichsweise hohen Zeitaufwand beim Umrüsten des Aufnahmemagazins. Zudem kann es hierbei zu Umrüstfehlern kommen, wenn eine Bedienperson jedenfalls einen der Einsteckstifte versehentlich in eine falsche und nicht in die für die bestimmte Einrüstung vorgesehene Bohrung einbringt.

Ein weiteres Problem besteht darin, dass eine jedenfalls dann, wenn die Handhabung der Werkstücke beim Einbringen in den Bearbeitungsraum der Werkstückmaschine und beim Einrüsten dort (Positionieren bzw. Übergeben in die Einspannung) und/oder beim Entnehmen der Werkstücke aus dem Bearbeitungsraum mithilfe eines Roboters durchgeführt wird, für die Positionierung des Roboterarmgreifers beim Anfahren des Aufnahmemagazins zum Ergreifen des Werkstücks eine Kenntnis eines Mittelpunkts bzw. einer Lage einer Mittelachse des Werkstücks von wesentlicher Bedeutung ist. Entsprechend muss dem Roboter die Lage dieses Mittelpunkts in Bezug auf die Geometrie des Aufnahmemagazins geteacht werden. Da in dem bekannten Aufnahmemagazin mit den Einsteckstiften die Werkstücke allerdings jeweils nur in einer punkt- bzw. linienförmigen Anlage mit Abschnitten ihrer Seitenkonturen an den die jeweilige Partition, bzw. das jeweilige Nest begrenzenden Einsteckstiften anliegen, ist eine genaue Lage des Mittelpunkts nicht einfach anhand der Kantengeometrie zu ermitteln, sondern es ist eine komplexe Rechenoperationen erforderlich wegen der sich hier ergebenden Prismenanlage.

Aus der EP 309444 A2 ist eine Palette zur Bereitstellung, zur Aufnahme und zum Transport von Werkstücken bekannt, bei der zur Anpassung an die Durchmesser aufzunehmender Werkstücke parallel verlaufenden Halteleisten in ihrem Abstand zueinander verstellt werden können. Eine entsprechende Verstellmöglichkeit in einer Richtung quer zum Verlauf der verstellbaren Halteleisten ist nicht vorgesehen.

Hier für eine Verbesserung und eine Vereinfachung eines hinsichtlich der Aufnahmepartitionen einstellbaren beziehungsweise anpassbarem Aufnahmemagazins zu sorgen, ist Aufgabe der vorliegenden Erfindung.

Diese Aufgabe löst die Erfindung mit einem hier vorgeschlagenen Aufnahmemagazin mit den Merkmalen des Anspruchs 1. Vorteilhafte Weiterbildungen eines solchen Aufnahmemagazins sind in den abhängigen Ansprüchen 2 bis 9 hinsichtlich der vorteilhaften Merkmale näher bestimmt. Ein weiterer Aspekt der erfindungsgemäßen Lösung besteht zudem in einer Bearbeitungsstation mit den Merkmalen des Anspruchs 10, zu der eine mögliche vorteilhafte Weiterbildung im Anspruch 11 bezeichnet ist.

Ein mit dieser Erfindung vorgeschlagenes Aufnahmemagazin für die Aufnahme einer Vielzahl von, insbesondere gleichen, Werkstücken in einem Werkstückbearbeitungsprozess weist somit zunächst eine ebene Ablagefläche und weiterhin in unterschiedlichen Positionen im Bereich der Ablagefläche anordbar Sektionierungselemente zum geometrischen Bestimmen und Begrenzen einer Mehrzahl von Ablagepositionen für die Werkstücke auf der Ablagefläche auf. Das Besondere ist nun, dass das Aufnahmemagazin ein erstes Paar von parallel zueinander verlaufen einander gegenüberliegenden, entlang einer ersten Richtung, einer x-Richtung, auf der Ablagefläche montierten Montageschienen aufweist und dass sie weiterhin ein zweites Paar von parallel zueinander verlaufenden, einander gegenüberliegenden, entlang einer zu der ersten, der x-Richtung, senkrecht verlaufenden zweiten Richtung, einer y-Richtung, auf der Ablagefläche montierte Montageschienen aufweist. Die Sektionierungselemente sind bei den hier vorgeschlagenen Aufnahmemagazin erfindungsgemäß gebildet durch eine Mehrzahl von ersten leisten- oder stabförmigen Begrenzungselementen, die positionsverschiebbar und mit ihrer Längsrichtung in der zweiten Richtung, der y-Richtung, verlaufend an den beiden Montageschienen des ersten Paares von Montageschienen festlegbar sind und weiterhin durch eine Mehrzahl von zweiten leisten- oder stabförmigen Begrenzungselementen, die positionsverschiebbar und mit ihrer Längsrichtung in der ersten Richtung, der x-Richtung, verlaufend an den beiden Montageschienen des zweiten Paares von Montageschienen festlegbar sind. Dabei sind ferner die Montageschienen des ersten Paares von Montageschienen, die Montageschienen des zweiten Paares von Montageschienen, die Mehrzahl von ersten Begrenzungselementen und die Mehrzahl von zweiten Begrenzungselementen derart gestaltet und aufeinander abgestimmt sind, dass unabhängig von der Anordnung und Positionierung der Mehrzahl erster Begrenzungselemente und der Mehrzahl zweiter Begrenzungselemente an dem jeweils zugehörigen Paar Montageschienen die jeweils andere Mehrzahl zweiter bzw. erster Begrenzungselemente an dem jeweils zugehörigen Paar Montageschienen anordbar und festlegbar ist. Mit anderen Worten können ungeachtet einer Anordnung und Verteilung der in x-Richtung verlaufenden Begrenzungselemente die in y-Richtung verlaufenden Begrenzungselemente bedarfsweise angeordnet und positioniert werden und können umgekehrt ungeachtet einer Anordnung und Positionierung der y-Richtung verlaufenden Begrenzungselemente die in x-Richtung verlaufenden Begrenzungselemente bedarfsgerecht angeordnet und positioniert werden.

Durch diese erfindungsgemäße und neue Ausgestaltung eines Aufnahmemagazins für Werkstücke, bei dem die Sektionierungselemente nicht wie aus dem Stand der Technik bekannt durch Einsteckstifte, sondern durch leistenförmige bzw. stabförmige Begrenzungselemente gebildet sind, die an seitlich angeordneten Montageschienen festlegbar sind, wird zum einen erreicht, dass ein Umrüsten des Aufnahmemagazins deutlich einfacher erhalten werden kann. Denn anstelle des Erfordernisses des Versetztens einer großen Zahl von Einsteckstiften kann hier eine Umrüstung durch ein einfaches Verlagern bzw. Neuanordnen von in der Zahl deutlich weniger vorhandenen Begrenzungselementen vorgenommen werden. Dadurch, dass die Begrenzungselemente, die in x-Richtung verlaufen, und die Begrenzungselemente, die in y-Richtung verlaufen, jeweils unabhängig voneinander positioniert und eingerichtet werden können, kann eine solche Ein- bzw. Umrüstung auch einfach und schnell vorgenommen werden. Ein weiterer Vorteil besteht darin, dass durch die leisten- bzw. stabförmigen Begrenzungselemente die so erhaltenen, rechteckförmigen bzw. quadratischen Sektionen bzw. Ablagepositionen jeweils umlaufend durch eine geradlinig verlaufende Kante begrenzt sind, sodass bei einem Anordnen eines Werkstücks in der so gebildeten Sektion die Lage eines Werkstückmittelpunkts bzw. einer Werkstückmittelachse einfach rechnerisch bestimmt werden kann, ausgehend von den jeweils an dem Begrenzungselemente anliegenden Kanten. Dies erlaubt eine einfache Berechnung und damit ein einfacheres Einrichten eines Roboters, sofern ein solcher das Handling der in dem erfindungsgemäßen Aufnahmemagazin aufgenommenen Werkstücke übernehmen soll.

Grundsätzlich kann es dabei insbesondere möglich sein, an den Montageschienen jeweils erste bzw. zweite Begrenzungselemente in unterschiedlicher Zahl anzuordnen und diese in unterschiedlichen Positionen daran festzulegen. Entsprechend kann ein erfindungsgemäßes Aufnahmemagazin mit einer größeren Anzahl von ersten bzw. zweiten Begrenzungselementen versehen bzw. ausgestattet sein, wobei in einer konkreten Einrüstung des Aufnahmemagazins nicht zwingend sämtliche der Begrenzungselemente montiert sein müssen. Insbesondere dann, wenn vergleichsweise groß dimensionierte Aufnahmepartitionen einzustellen sind, d. h. die Begrenzungselemente mit vergleichsweise großen Abständen untereinander an den Montageschienen festzulegen sind, sind nur wenige derartige Begrenzungselemente benötigt, können überschüssige Begrenzungselemente insgesamt entnommen werden. Auch ist es möglich, Begrenzungselemente von unterschiedlicher Gestalt vorzusehen, mit denen dann entsprechend der Form und Gestaltung aufzunehmender Werkstücke angepasste Aufnahmen geometrischen geschaffen werden können. Für zum Beispiel besonders flache Werkstücke können dann Begrenzungselemente mit geringer Höhenerstreckung vorgesehen sein, während für hoch aufragende Werkstücke Begrenzungselemente von größerer Höhenerstreckung vorgesehen sein können. Entsprechend können hier also mehrere Sätze von unterschiedlich gestalteten Begrenzungselementen zu dem Aufnahmemagazin gleichermaßen als Set oder Baukasten gehören.

Weiterhin können die ersten und die zweiten Begrenzungselemente unterschiedlicher Natur sein, es können aber auch gleichgeformte Begrenzungselemente vorhanden sein, die wahlweise als erste oder als zweite Begrenzungselemente eingesetzt werden können. Eine solche Variante ist dabei sogar dahingehend von Vorteil, dass sie die Teilevielfalt eines erfindungsgemäßen Aufnahmemagazins reduziert und auch den Aufbau vereinfacht, da eine Bedienperson nicht mehr unterscheiden muss zwischen den ersten oder zweiten Begrenzungselementen, sondern ein einheitliches Begrenzungselement entweder als erstes Begrenzungselement oder auch als zweites Begrenzungselement verwenden kann, je nach der dann gewählten Einbauposition.

Das erfindungsgemäße Aufnahmemagazin kann insbesondere aus Metall, zum Beispiel aus Aluminium oder auch aus Stahl, wie etwa nicht rostenden Stahl, z.B. einem Chrom-Nickel-Stahl, gebildet sein. Es kann aber auch aus anderen Materialien bestehen, die ausreichend formstabil und steif sind, zum Beispiel aus einem geeigneten Kunststoff.

Für die Führung und Festlegung der Begrenzungselemente an den Montageschienen sind im Bereich der Längsenden der Begrenzungselemente jeweils Führungsabschnitte ausgebildet und sind in den Montageschienen Halte- und Führungsstrukturen vorgesehen, in denen die Führungsabschnitte der korrespondierenden Begrenzungselemente aufgenommen und geführt werden können. Hier können zum Beispiel an den jeweiligen Längsenden der Begrenzungselemente T-förmige Vorsprünge und in den Montageschienen korrespondierende T-Nuten ausgebildet sein. Es kommen aber auch andere Arten von korrespondierenden Strukturen in Betracht, die insbesondere ein Verschieben der Begrenzungselemente entlang der Längsrichtung der zugehörigen Montageschienen ermöglichen.

Um nun eine Unabhängigkeit der Verlagerung und des Anbringens der Begrenzungselemente an den Montageschienen zu erreichen, ist vorgesehen, dass die Halte- und Führungsstrukturen in den Montageschienen des ersten Paares in einer ersten Höhenpositionen einer senkrecht sowohl zu der ersten Richtung, der x-Richtung, als auch zu der zweiten Richtung, der y-Richtung, verlaufenden dritten Richtung, z-Richtung, entlang der ersten Richtung, also der x-Richtung, verlaufend vorgesehen sind und dass die Halte- und Führungsstrukturen in den Montageschienen des zweiten Paares in einer zweiten Höhenposition der dritten Richtung, z-Richtung, entlang der zweiten Richtung, y-Richtung, verlaufend vorgesehen sind und dass ferner die erste und die zweite Höhenposition derart gewählt sind, dass die ersten Begrenzungselemente und die zweiten Begrenzungselemente in einer solchen Weise in unterschiedlichen Positionen entlang der dritten Richtung, der z-Richtung, angeordnet liegen, dass diese aufeinander aufliegen oder einander nicht berühren und somit unabhängig voneinander verlagerbar sind. Hier wird mit anderen Worten eine übereinandergelegte Anordnung der ersten Begrenzungselemente unter zweiten Begrenzungselemente erhalten, die dann eine jeweils unabhängig verlagerbare und einstellbare Positionierung der Begrenzungselemente in den entsprechend übereinander angeordneten Ebenen ermöglicht.

Grundsätzlich kann vorgesehen sein, dass die Begrenzungselemente an den Montageschienen stufenlos einstellbar positionierbar sind und entsprechend stufenlos in beliebigen Positionen an den Montageschienen festgelegt werden können. Eine Einstellung kann zum Beispiel automatisch und motorisch getrieben vorgesehen sein, wobei dies üblicherweise nicht erforderlich ist, da eine Verstellung auch händisch durch eine Bedienperson schnell und einfach vorgenommen werden kann. Um hier die Einstellung zu vereinfachten, kann vorgesehen sein, dass in den Halte- und Führungsstrukturen in den Montageschienen an vorgegebenen Rasterpositionen erste Rastmittel vorgesehen und dass im Bereich der Führungsabschnitte der Begrenzungselemente zweite Rastmittel ausgebildet sind, die mit den ersten Rastmitteln derart zusammenwirken, dass sie die Begrenzungselemente in den jeweils eingenommenen Rasterpositionen verrastend festlegen können. Hier können zum Beispiel federbelastete Stifte an den Führungsabschnitten der Begrenzungselemente vorgesehen sein, die in entsprechend ausgebildete Bohrungen an den Montageschienen eingreifen und aus denen wiederum gelöst werden können, wobei die Bohrungen entsprechend in den nach dem vorgegebenen Raster verteilten Rasterpositionen ausgebildet sind. Auch andere Arten vom Rastmitteln sind hier denkbar.

Um ein flexibles Bestückten der jeweiligen Paare von Montageschienen mit einer vorgebbaren und wählbaren Anzahl an ersten bzw. zweiten Begrenzungselementen vornehmen zu können, können die Halte- und Führungsstrukturen des zugehörigen Paares der Montageschienen und die Führungsabschnitte der zugehörigen Begrenzungselemente in einer solchen Weise ausgebildet sein, dass die Begrenzungselemente mit ihren Führungsabschnitten in die Halte- und Führungsstrukturen eingesetzt und daran aufgenommen bzw. aus diesen wieder entnommen werden können. Dadurch ergibt sich die vorstehend schon beschriebene vorteilhafte Flexibilität des so gebildeten Aufnahmemagazins.

Bei dem erfindungsgemäßen Aufnahmemagazin kann ferner vorgesehen sein, dass die Ablagefläche auf einer Basis angeordnet und gegenüber der Basis in einem insbesondere frei wählbar einstellbaren Winkel um eine Kippachse verkippbar ist. Hierdurch kann eine Neigungseinstellung des Aufnahmemagazins erreicht werden, was zum Beispiel dann, wenn Werkstücke aufgrund einer vorher durchgeführten Bearbeitung mit einem Kühlmittel, einem Schmiermittel oder einem ähnlichen Mittel benetzt sind, ein Ablaufen und Abtropfen eines solchen Mittels befördern kann. Auch kann eine Einstellung vorgenommen werden, die es bei komplexer geformten Werkstücken ermöglicht, diese besser mit einem automatisierten System, also einem Greifarm eines Roboters, zu erfassen. Die Kippachse kann dabei insbesondere parallel zu einer Montageschienen und mit Vorteil im Bereich dieser Montageschienen, also im Wesentlichen unterhalb der oder leicht versetzt vor oder hinter der Montageschienen vorgesehen sein, sodass also der gesamte durch die Montageschienen begrenzte Bereich in einer Neigung aufwärts verstellt werden kann.

In einer weiteren möglichen Weiterbildung kann das erfindungsgemäße Aufnahmemagazin Einsetzstücke umfassen, die in die Aufnahmepositionen bzw. die Fächer, die durch die Begrenzungselemente in den dazwischen belassen Zwischenräumen gebildet sind, eingesetzt werden können und die eine Aufnahme zum Aufnehmen eines Werkstücks aufweisen. Mit solchen Einsetzstücken können insbesondere solche Werkstücke in einem erfindungsgemäßen Aufnahmemagazin positioniert werden, die für ein direktes Einsetzen in die Aufnahmeposition bzw. Fächer ungeeignete Basiskonturen aufweisen, zum Beispiel zu einem unten anzuordnenden Ende hin sehr schmal werden oder dergleichen.

Insbesondere können bei einem erfindungsgemäßen Aufnahmemagazin das erste Paar Montageschienen und das zweite Paar Montageschienen gemeinsam einen in einer Aufsicht umlaufenden, einen inneren Auflagebereich umschließenden Rahmen bilden. Dadurch können insbesondere auch die Montageschienen selbst außenliegende Aufnahmebereich oder Fächer begrenzen und damit als Begrenzungselemente dienen. Um in einer einfachen Weise insbesondere quadratische Aufnahmepositionen und Fächer auszubilden, kann es von Vorteil sein, wenn sämtliche Montageschienen gleich lang gebildet sind.

Insbesondere dann, wenn in einem erfindungsgemäßen Aufnahmemagazin aufgenommene Werkstücke von einer Bearbeitungsstation zu einer weiteren Bearbeitungsstation verbracht werden müssen, zum Beispiel für einen anschließenden weiterführenden Bearbeitungsschritt oder für ein Abpacken in Versandbehältnisse oder dergleichen, kann es von Vorteil sein, dass das Aufnahmemagazin auf einem Rolltisch angeordnet ist, wobei es weiterhin von Vorteil ist, wenn dieser Rolltisch Mittel zum positionsbestimmten Anschließend an einer Werkstückbereitstellungsstation einer Bearbeitungsstation für die Bearbeitung von Werkstücken aufweist. Denn über solche Mittel wird dann eine definierte und immer gleiche Positionen des Aufnahmemagazins in der Werkstückbereitstellungsstation erhalten, sodass gerade bei einer automatisierten weiteren Beförderung mit z.B. einem Roboter dieser die Positionen in dem Aufnahmemagazin, die ihm einmal vorgegeben sind, auch dann weiterhin kennt bzw. erkennt, wenn dieses mit dem Rolltisch erst zu der Werkstückbereitstellungsstation verbracht und dort mittels der Mittel zum positionsbestimmenden Anschließen genau positioniert worden ist.

Eine weitere Ausgestaltung der Erfindung besteht in einer Bearbeitungsstation für die, insbesondere spanabhebende, Bearbeitung von Werkstücken mit einer Werkstückbearbeitungsmaschine, einer Werkstückbereitstellungsstation für das Positionieren einer Mehrzahl von sequenziell in der Werkstückbearbeitungsmaschine zu bearbeitenden Werkstücken und/oder für das Positionieren von fertig bearbeiteten, aus der Werkstückbearbeitungsmaschine entnommenen Werkstücken, sowie mit einem Roboter zum automatischen Beladen der Werkstückbearbeitungsmaschine mit in der Werkstückbereitstellungsstation bereitgestellten Werkstücken und/oder zum Entladen der Werkstückbearbeitungsmaschine und Abstellen der bearbeiteten Werkstücke in der Werkstückbereitstellungsstation, wobei in der Werkstückbereitstellungsstation ein wie vorstehend beschriebenes Aufnahmemagazin vorgesehen ist. Der Roboter kann dabei insbesondere ein kooperativer Roboter (Cobot) sein.

Weitere Vorteile und Merkmale der Erfindung ergeben sich aus der nachfolgenden Beschreibung möglicher Ausführungsformen und den beigefügten Figuren. In diesen Figuren zeigen:
- Fig. 1: eine dreidimensionale Ansicht einer möglichen Gestaltungsvariante eines erfindungsgemäßen Aufnahmemagzins;
- Fig. 2: eine Aufsicht auf das Aufnahmemagazin aus Fig. 1;
- Fig. 3: eine Seitenansicht des Aufnahmemagazins aus Fig. 1;
- Fig. 4: eine Schnittansicht des Aufnahmemagazins aus Fig. 1 entsprechend der in Fig. 2 mit A-A gekennzeichneten Schnittlinie;
- Fig. 5: eine vergrößerte Ausschnittdarstellung eines Details des Aufnahmemagazins aus Fig. 1 entsprechend dem in Fig. 4 mit B bezeichneten Bereich;
- Fig. 6: eine dreidimensionale Ansicht eines erfindungsgemäßen Aufnahmemagazins in einer ersten Einrichtung für die Aufnahme einer ersten Art von Werkstücken und darin aufgenommenen kreiszylinderförmigen Werkstücken einer ersten Form;
- Fig. 7: eine Aufsicht auf die Anordnung gemäß Fig. 6;
- Fig. 8: eine dreidimensionale Ansicht eines erfindungsgemäßen Aufnahmemagazins in einer zweiten Einrichtung für die Aufnahme einer zweiten Art von Werkstücken und darin aufgenommenen quaderförmigen Werkstücken;
- Fig. 9: eine Aufsicht auf ein erfindungsgemäßes Aufnahmemagazin in einer dritten Einrichtung für die Aufnahme einer dritten Art von Werkstücken und darin aufgenommenen kreiszylinderförmigen Werkstücken einer zweiten Form;
- Fig. 10: eine dreidimensionale Ansicht eines erfindungsgemäßen Aufnahmemagazins in einer vierten Einrichtung mit eingesetzten Einsetzstücken, in denen wiederum Werkstücke einer vierten Art festlegbar sind;
- Fig. 11: 14 eine dreidimensionale Ansicht einer Werkstückbearbeitungsstation mit einem darin eingeschlossenen erfindungsgemäßen Aufnahmemagazin.

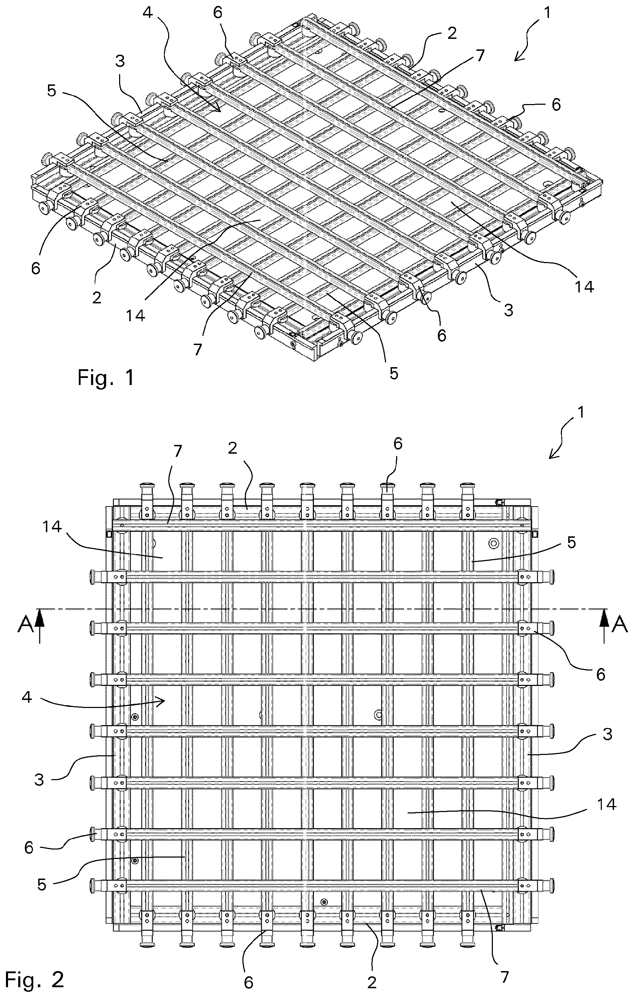

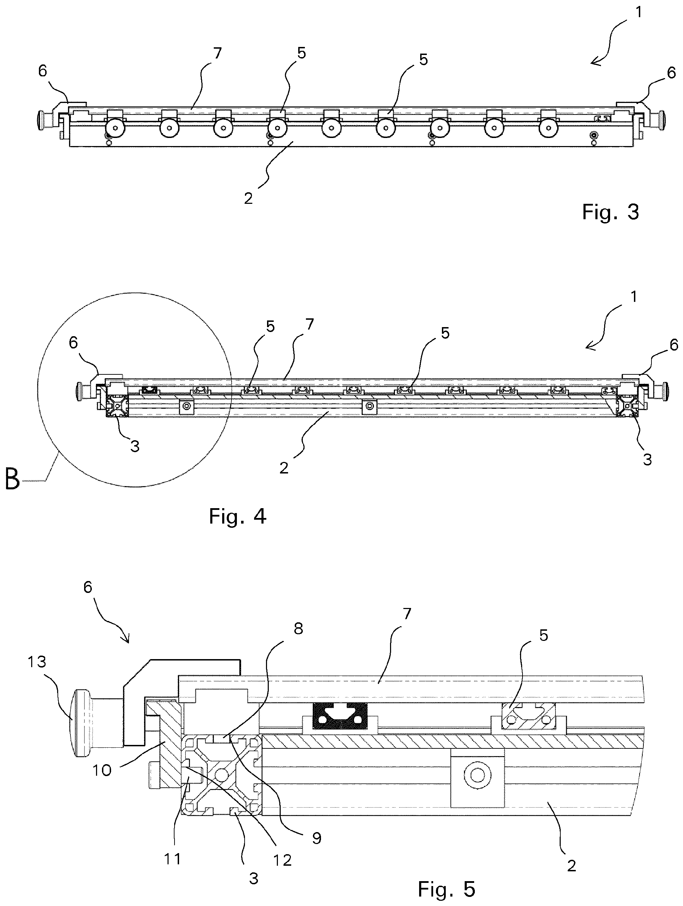

In den beiliegenden Zeichnungen ist zunächst in den Figuren 1 bis 5 in verschiedenen Ansichten eine mögliche Ausgestaltungsform eines erfindungsgemäßen Aufnahmemagazins 1 gezeigt. Dabei zeigt die Figur 1 eine dreidimensionale Ansicht, die Figur 2 eine Aufsicht von oben, die Figur 3 eine Seitenansicht, die Figur 4 eine entlang der Schnittlinie A-A aus Figur 2 genommene Schnittansicht und die Figur 5 eine vergrößerte Detaildarstellung des mit B bezeichneten Ausschnitts aus Figur 4.

Das Aufnahmemagazin 1 umfasst zunächst rahmenartig umlaufend angeordnete Montageschienen, nämlich ein Paar aus zueinander parallel verlaufend einander gegenüberliegenden ersten Montageschienen 2 und ein Paar auseinander zueinander parallel verlaufend einander gegenüberliegenden zweiten Montageschienen 3. Die Montageschienen 2, 3 sind fest auf einem eine ebene Ablagefläche 4 ausbildenden Boden montiert. Dabei verlaufen die ersten Montageschienen 2 in ihrer Längserstreckung jeweils senkrecht zu der jeweiligen Längserstreckung der zweiten Montageschienen 3 und bilden zusammen einen quadratischen Rahmen.

Erste Begrenzungselemente 5 in Form von längserstreckten, geradlinigen Leisten sind mit ihren einander gegenüberliegenden Längsenden jeweils an einer der ersten Montageschienen 2 lösbar und verschiebbar festgelegt und verlaufen senkrecht zu der Längserstreckung der ersten Montageschienen 2 und somit parallel zur Längserstreckung der zweiten Montageschienen 3. Hierzu sind an den Längsenden dieser ersten Begrenzungselemente 5 Führungsabschnitte 6 ausgebildet, die mit Halte- und Führungsstrukturen in den ersten Montageschienen 2 zusammenwirken. Zweite Begrenzungselemente 7, die ebenfalls die Form von längserstreckten, geradlinigen Leisten aufweisen, sind mit ihren einander gegenüberliegenden Längsenden jeweils an einer der zweiten Montageschienen 3 lösbar und verschiebbar festgelegt und verlaufen senkrecht zu der Längserstreckung der zweiten Montageschienen 3 und somit parallel zur Längserstreckung der ersten Montageschienen 2. Auch an den Längsenden dieser zweiten Begrenzungselemente 7 sind entsprechend Führungsabschnitte 6 ausgebildet, die mit Halte- und Führungsstrukturen in den zweiten Montageschienen 3 zusammenwirken.

Aus der Figur 5 ist nun genauer erkennen, wie die Führung der Längsenden der Begrenzungselemente 5 und 7 an den zugeordneten Montageschienen 2 und 3 umgesetzt ist. Gezeigt ist in dieser Figur eine Schnittansicht, in der eine zweite Montageschiene 3 des Paares dieser zweiten Montageschienen 3 im Schnitt dargestellt ist und ein Ende eines an dieser angeordneten zweiten Begrenzungselements 7.

In dem gezeigten Führungsabschnitt 6 ist, wie in den anderen Führungsabschnitten ebenso, ein Führungsvorsprung 8 vorgesehen, der nach unten vorstehend in eine auf der Oberseite der hier als Metallprofil ausgebildeten Montageschienen 3 vorgesehene Längsnut 9 eingreift und darin geführt ist. An einem in dem Führungsabschnitt 6 ausgebildeten, seitlich nach unten ragenden Arm 10 ist ein Riegelstift 11 angeordnet, der hier in einer Position gezeigt ist, in der er in eine Riegelaufnahme 12 eingreift, die einer Außenseite der Montageschienen 3 gebildet ist. Gegen die Kraft der hier nicht näher gezeigten Feder kann der Riegelstift 11 aus der Riegelaufnahme 12 gelöst werden, sodass dann der Führungsabschnitt 6, geführt durch den Führungsvorsprung 8 in Längsrichtung der Montageschienen 3 verschoben werden kann, somit, wenn auch an seinem gegenüberliegenden Längsende, an dem eine gleichartige Anordnung des Führungsabschnitts 6 vorgesehen ist, der Riegelstift 11 aus einer entsprechenden Riegelaufnahme 12 gelöst ist, auch das Begrenzungselement 7. Derartige Riegelaufnahmen 12 sind in äquidistanten Rasterabständen entlang der Außenfläche der Montageschienen 3 verteilt vorgesehen, sodass die Begrenzungselemente 7 in einer freien Wahl entsprechend an den so gebildeten Rasterpositionen in der oben beschriebenen Weise verriegelnd festgelegt werden können.

Zu erkennen ist auch, dass bei an beiden Längsenden aus der Riegelaufnahme 12 herausgezogenen Riegelstiften 11 das Begrenzungselemente 7 von den Montageschienen 3 gelöst und nach oben abgehoben werden kann. Es ist somit also möglich, das Aufnahmemagazin 1 nicht nur mit einer unterschiedlichen Abstandseinstellung der Begrenzungselemente 7 zu justieren, sondern hier auch Begrenzungselemente 7 einzusetzen oder zu entnehmen, also Begrenzungselemente 7 in einer vorgewählten Anzahl anzuordnen.

Ein Griffelement 13 vereinfacht die Handhabe für das Einsetzen, Entnehmen und Positionieren der Begrenzungselemente 7. Hinsichtlich der Festlegung und dem Positionieren der ersten Begrenzungselemente 5 an den ersten Montageschienen 2 ist eine gleichartig gebildete Konstruktion gewählt, sodass diesbezüglich auf die vorstehende Beschreibung der Figur 5 verwiesen kann, die entsprechend auch für die Festlegung und Gestaltung der ersten Begrenzungselemente 5 gilt.

Zu erkennen ist auch, dass die ersten Begrenzungselemente 5 in einer unteren Höhenposition angeordnet sind, dass die zweiten Begrenzungselemente 7 in einer darüberliegenden Höhenposition angeordnet sind, sodass die ersten Begrenzungselemente 5 und die zweiten Begrenzungselemente 7 in unterschiedlichen Ebenen liegen und somit unabhängig voneinander verschoben und positioniert werden können.

Zu erkennen schließlich ist auch, dass zwischen den sich jeweils kreuzenden Begrenzungselementen 5 und 7 rechteckige Aufnahmefächer 14 ausgebildet sind. Diese sind insbesondere gleich dimensioniert und gleich geformt und können somit der Aufnahme gleichartiger, also im Wesentlichen identisch gebildeter, Werkstücke dienen, die somit in einem solchen Aufnahmemagazin in einer matrixartigen Anordnung gehalten und bevorratet werden können.

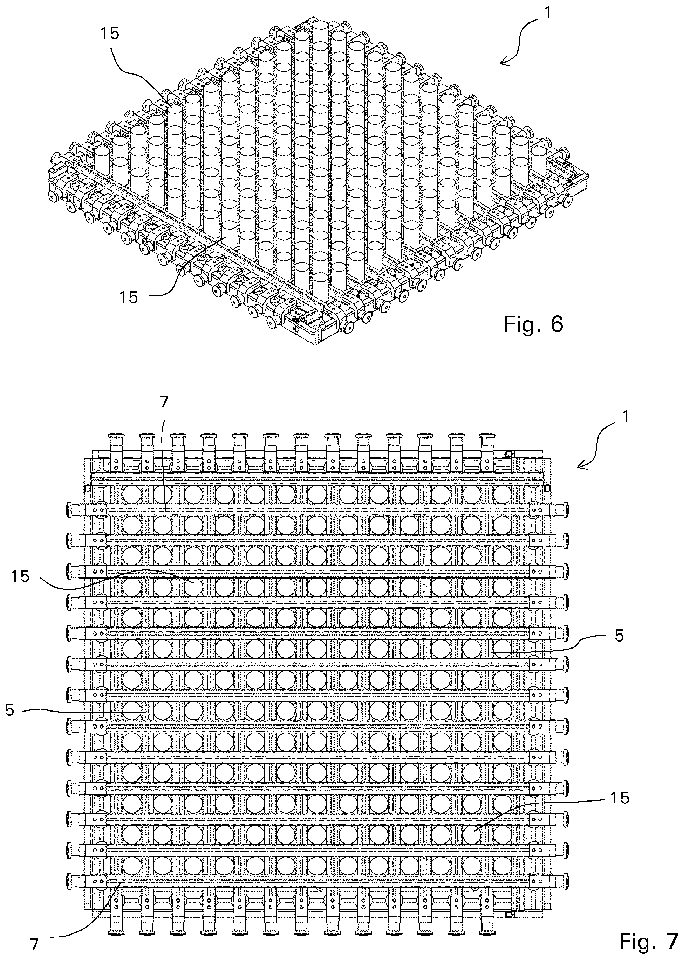

In den Figuren 5 bis 10 sind nun in verschiedenen Ansichten unterschiedliche Konfigurationen eines Aufnahmemagazins 1 gezeigt, entsprechend eine Anpassung an jeweils daran aufzunehmende Werkstücke. Dabei zeigen die Figuren 6 und 7 eine Konfiguration mit einer vergleichsweise großen Anzahl montierter und entsprechend eingesetzter erster und zweiter Begrenzungselemente 5, 7. Hierdurch sind vergleichsweise klein bemessene, quadratische Aufnahmefächer gebildet, in denen in diesem Beispiel zylinderförmige Werkstücke 15 mit einem vergleichsweise geringen Durchmesser eingesetzt sind.

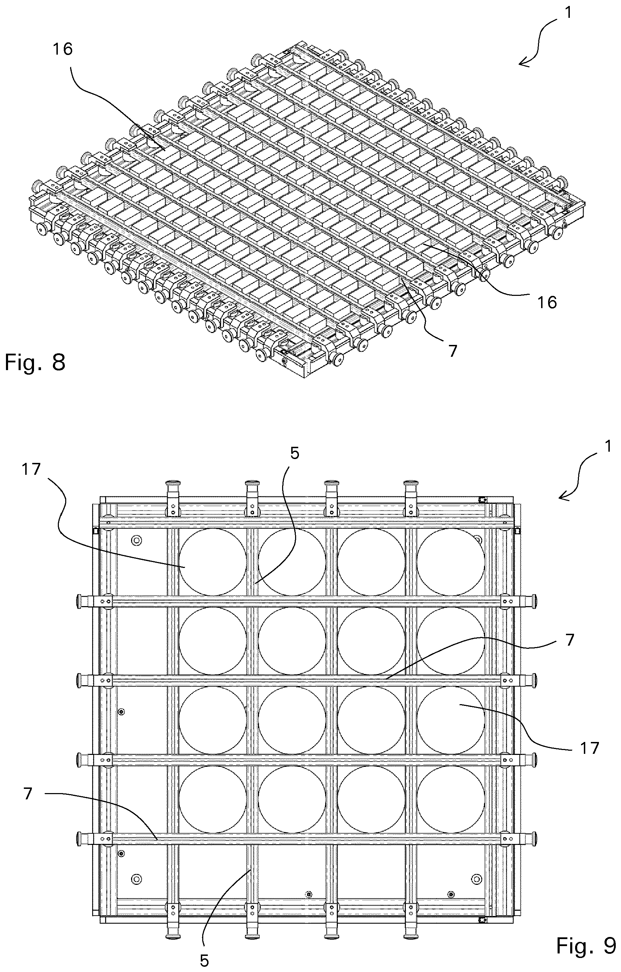

Die Figur 8 zeigt eine Konfiguration, in der rechteckige Aufnahmefläche gebildet sind zur Aufnahme von quaderförmigen Werkstücken 16. Hierzu sind dann in unterschiedlicher Anzahl erste und zweite Begrenzungselemente 5, 7 eingesetzt und sind die ersten Begrenzungselmente 5 mit zwar zueinander gleichen, aber anderen Abständen zueinander positioniert als die untereinander ebenfalls gleich beabstandeten zweiten Begrenzungselmente 7.

In Figur 9 ist eine weitere Konfiguration dargestellt, in der für die Aufnahme von kreiszylinderförmigen Werkstücken 17 mit deutlich größeren Durchmessern eine geringere Anzahl von ersten und zweiten Begrenzungselementen 5, 7 eingesetzt und entsprechend mit jeweils großem Abstand zueinander positioniert ist.

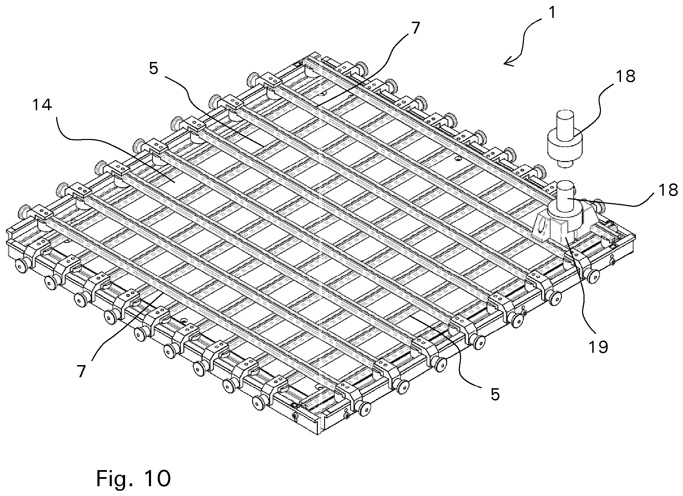

In Figur 10 ist eine weitere Möglichkeit gezeigt, Werkstückaufnahmen zu bilden für Werkstücke 18 mit komplexerer Gestaltung, insbesondere einer schmalen Aufstandfläche. Hierzu können Einsatzstücke 19 vorgesehen sein, die eine spezifisch für die Werkslücke 18 ausgebildete Aufnahme aufweisen und in die Aufnahmefächer 14 des Aufnahmemagazins 1 eingesetzt werden können.

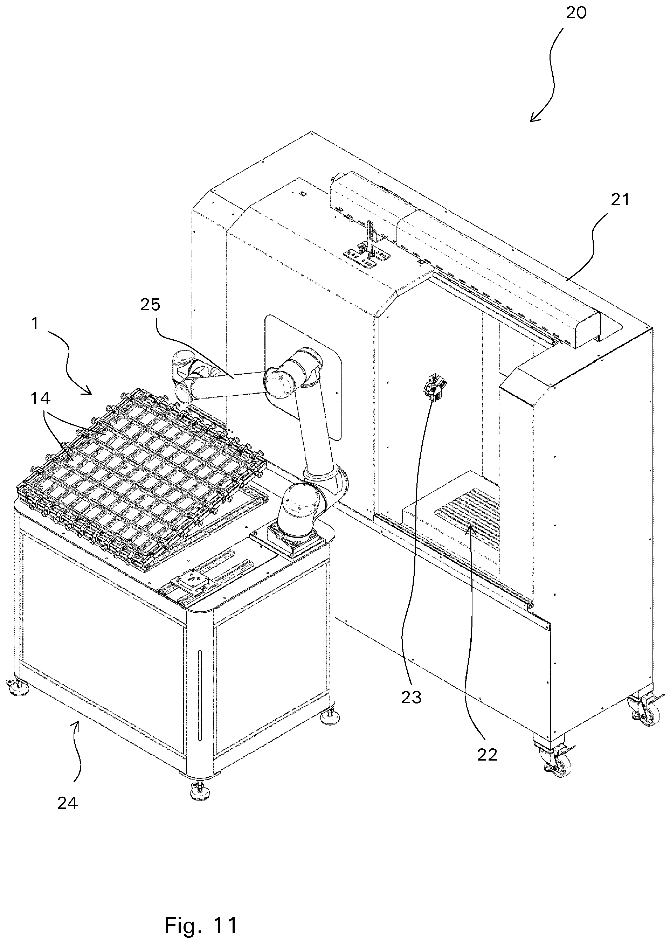

In Figur 11 ist schließlich eine Werkstückbearbeitungsstation 20 gezeigt, die eine Werkstückbearbeitungsmaschine 21, im vorliegenden Fall eine Mehrachsdrehmaschine, umfasst, in der ein Bearbeitungsraum 22 gebildet ist und darin eine Werkstückaufspannung 23. Weiterer Bestandteil der Werkstückbearbeitungsstation 20 ist ein Ablageblock 24, auf dessen Oberseite ein erfindungsgemäßes Aufnahmemagazin 1 befestigt ist. Hier ist dieses Aufnahmemagazin 1 mit einer weiteren Eigenschaft gezeigt, nämlich einer Winkel-Einstellmöglichkeit, die sich dadurch ergibt, dass die Ablagefläche 4 mit den darauf montierten Montageschienen 2, 3 und den an den Montageschienen 2, 3 festgelegten Begrenzungselementen 5, 7 insgesamt um eine Schwenkachse verkippbar und in einem eingestellten Kippwinkel arretierbar ist. Dies kann zum Beispiel von Vorteil sein, wenn in das Aufnahmemagazin 1 eingestellte Werkstücke mit einem flüssigen Medium benetzt sind, das dann abtropfen und entsprechend ablaufen kann. Auf dem Ablageblock 24 ist zudem der Roboterarm 25 eines, hier als kollaborativer Roboter ausgebildeten, Roboters montiert. Mit diesem Roboterarm 25 werden in dem Aufnahmemagazin 1 angeordnete Werkstücke während des Bearbeitungsprozesses ergriffen, in den Bearbeitungsraum 22 der Werkstückbearbeitungsmaschine 21 eingeführt und dort der Aufspannung 23 zugeführt. Ebenso kann nach erfolgter Bearbeitung durch die Werkstückbearbeitungsmaschine 21 das Werkstück mithilfe des Roboterarms 25 aus der Aufspannung 23 entnommen und entweder in eine weitere, hier nicht gezeigte Ablage in Form eines Aufnahmemagazins 1 eingesetzt werden oder aber zurück verbracht werden an einer Position des Aufnahmemagazins 1, aus dem es zuvor eingangs des Bearbeitungsprozesses entnommen worden war.

Da bei einer Umrüstung des Aufnahmemagazins 1 für einen Werkstückwechsel, also zum Beispiel einer Änderung aus der Konfiguration wie in den Figuren 6 und 7 gezeigt zur Konfiguration entsprechend der Figur 9 eine Änderung der Geometrie erfolgt und insbesondere die jeweiligen Mittelpunkte der Werkstücke, die der Roboterarm 25 mit seinem Greifer anfahren muss, eine andere Lage aufweisen, ist es erforderlich, den Roboter zuvor so zu programmieren, dass er die anzufahrenden Aufnahmefächer 14 kennt und darin entsprechend die Werkstücke ergreifen, gegebenenfalls vorher identifizieren kann. Um dies einfacher durchführen zu können, können zum Beispiel an den Montageschienen2, 3 Lineale angebracht sein, an denen eine Bedienperson die Positionen der ersten und zweiten Begrenzungselemente 5, 7 ablesen und in ein Robotersystem übertragen kann. Es ist aber auch möglich, zum Beispiel über eine Bilderfassung und messtechnische Auswertung des erfassten Bildes, die Einstellung der ersten und zweiten Begrenzungselemente 5, 7 automatisiert zu ermitteln und dann zum Beispiel über einen aus einem Bilderfassungssystem, welches zum Beispiel auch in einem Smartphone realisiert sein kann, ausgegebenen OR-Code an eine entsprechende Einleseschnittstelle des Roboters zu übertragen oder auf eine andere an sich bekannterweise dorthin zu übermitteln.

Aus der vorstehenden Beschreibung möglicher Ausgestaltungsvarianten und den Figuren ist insbesondere noch einmal deutlich geworden, welche Vorteile die Erfindung mit sich bringt. Es ist klar zu erkennen, dass sich eine deutlich vereinfachte Umrüstung des erfindungsgemäßen Aufnahmemagazins 1 ergibt und dass eine sehr einfach zu bestimmende und definierte Lage der Werkstücke in den je welligen Aufnahmefächern 14 erreicht wird, dadurch dass die Werkstücke mit Außenkanten an den jeweils angrenzenden Begrenzungselementen 5, 7 anliegen und somit auf eine Mittelpunkts- bzw. Mittelachslage einfache geschlossen werden kann.

### Bezugszeichenliste

- 1: Aufnahmemagazin
- 2: erste Montageschiene
- 3: zweite Montageschiene
- 4: Ablagefläche
- 5: erstes Begrenzungselement
- 6: Führungsabschnitt
- 7: zweites Begrenzungselement
- 8: Vorsprung
- 9: Längsnut
- 10: Arm
- 11: Riegelstift
- 12: Riegelaufnahme
- 13: Griffelement
- 14: Aufnahmefach
- 15: Werkstück
- 16: Werkstück
- 17: Werkstück
- 18: Werkstück
- 19: Einsatzstück
- 20: Werkstückbearbeitungsstation
- 21: Werkstückbearbeitungsmaschine
- 22: Bearbeitungsraum
- 23: Werkstückaufspannung
- 24: Ablageblock
- 25: Roboterarm

## Patentansprüche

1. Aufnahmemagazin (1) für die Aufnahme einer Vielzahl von, insbesondere gleichen, Werkstücken (15, 16, 17, 18) in einem Werkstückbearbeitungsprozess mit einer ebenen Ablagefläche (4), einem ersten Paar von zueinander parallel verlaufenden, einander gegenüberliegenden, entlang einer ersten Richtung (x-Richtung) auf der Ablagefläche montierten Montageschienen (2) und mit in unterschiedlichen Positionen im Bereich der Ablagefläche (4) anordbaren Sektionierungselementen zum geometrischen Bestimmen und Begrenzen einer Mehrzahl von Aufnahmefächern (14) für die Werkstücke (15, 16, 17, 18) auf der Ablagefläche (4), einem zweiten Paar von zueinander parallel verlaufenden, einander gegenüberliegenden, entlang einer zu der ersten Richtung (x-Richtung) senkrechten, zweiten Richtung (y-Richtung) auf der Ablagefläche (4) montierten Montageschienen (3), wobei die Sektionierungselemente gebildet sind durch eine Mehrzahl von ersten leisten- oder stabförmigen Begrenzungselementen (5), die positionsverschiebbar und mit ihrer Längsrichtung in der zweiten Richtung (y-Richtung) verlaufend an den beiden Montageschienen (2) des ersten Paares von Montageschienen (2) festlegbar sind, sowie durch eine Mehrzahl von zweiten leisten- oder stabförmigen Begrenzungselementen (7), die positionsverschiebbar und mit ihrer Längsrichtung in der ersten Richtung (x-Richtung) verlaufend an den beiden Montageschienen (3) des zweiten Paares von Montageschienen (3) festlegbar sind, wobei in durch die Zwischenräume zwischen den Begrenzungselementen (5, 7) gebildete Aufnahmefächer (14) Werkstücke (18) einsetzbar sind, wobei die Montageschienen (2) des ersten Paares von Montageschienen (2), die Montageschienen (3) des zweiten Paares von Montageschienen (3), die Mehrzahl von ersten Begrenzungselementen (5) und die Mehrzahl von zweiten Begrenzungselementen (7) derart gestaltet und aufeinander abgestimmt sind, dass unabhängig von der Anordnung und Positionierung der Mehrzahl erster Begrenzungselemente (5) und der Mehrzahl zweiter Begrenzungselemente (7) an dem jeweils zugehörigen Paar Montageschienen (2, 3) die jeweils andere Mehrzahl zweiter (7), bzw. erster (5) Begrenzungselemente an dem jeweils zugehörigen Paar Montageschienen (3, 2) anordbar und festlegbar ist, wobei im Bereich der Längsenden der Begrenzungselemente (5, 7) jeweils Führungsabschnitte (6) ausgebildet sind und wobei in den Montageschienen (2, 3) Halte- und Führungsstukturen (9) zum Aufnehmen und Führen der Führungsabschnitte (6) der korrespondierenden Begrenzungselemente (5, 7) vorgesehen sind, wobei die Halte- und Führungsstrukturen (9) in den Montageschienen (2) des ersten Paares in einer ersten Höhenposition einer senkrecht sowohl zu der ersten Richtung (x-Richtung) als auch zu der zweiten Richtung (y-Richtung) verlaufenden dritten Richtung (z-Richtung) entlang der ersten Richtung (x-Richtung) verlaufend vorgesehen sind und wobei die Halte- und Führungsstrukturen (9) in den Montageschienen (3) des zweiten Paares in einer zweiten Höhenposition der dritten Richtung (z-Richtung) entlang der zweiten Richtung (y-Richtung) verlaufend vorgesehen sind, wobei die erste und die zweite Höhenposition derart gewählt sind, dass die ersten Begrenzungselemente (5) und die zweiten Begrenzungselemente (7) derart in unterschiedlichen Positionen entlang der dritten Richtung (z-Richtung) angeordnet liegen, dass diese aufeinander aufliegen oder einander nicht berühren und somit unabhängig voneinander verlagerbar sind.

2. Aufnahmemagazin (1) nach Anspruch 1, **dadurch gekennzeichnet, dass** in den Halte- und Führungsstrukturen (9, 12) in den Montageschienen (2. 3) an vorgegebenen Rasterpositionen erste Rastmittel vorgesehen (12) sind, zum Zusammenwirken im Bereich der Führungsabschnitte (6) der Begrenzungselemente (5, 7) jeweils vorgesehenen zweiten Rastmitteln (11), um die Begrenzungselemente (5, 7) an jeweils vorgegebenen Rasterpositionen an den Montageschienen (2,3) zu positionieren und festzulegen.

3. Aufnahmemagazin (1) nach einem der vorhergehenden Ansprüche, **dadurch gekennzeichnet, dass** die Halte- und Führungsstrukturen (9, 12) in den Montageschienen (2, 3) und die Führungsabschnitte (6) der Begrenzungselemente (5, 7) derart ausgebildet sind, dass die Begrenzungselemente (5, 7) jeweils in die Halte- und Führungsstrukturen (9, 12) des zugehörigen Paares der Montageschienen (2. 3) eingesetzt und aus diesen Halte- und Führungsstrukturen (9, 12) entnommen werden können, um so die Anzahl der jeweiligen Mehrzahl von ersten (5) und zweiten (7) Begrenzungselementen variabel einstellen zu können.

4. Aufnahmemagazin (1) nach einem der vorhergehenden Ansprüche, **dadurch gekennzeichnet, dass** die Ablagefläche (4) auf einer Basis angeordnet und gegenüber der Basis in einem insbesondere wählbar einstellbaren Winkel um eine Kippachse verkippbar ist.

5. Aufnahmemagazin (1) nach Anspruch 4, **dadurch gekennzeichnet, dass** die Kippachse parallel zu einer Montageschiene (2. 3) und insbesondere im Bereich derselben angeordnet ist.

6. Aufnahmemagazin (1) nach einem der vorhergehenden Ansprüche, **gekennzeichnet durch** ein durch die Zwischenräume zwischen den Begrenzungselementen (5, 7) gebildete Aufnahmefächern (14) einsetzbare Einsetzstücke (19) mit einer Aufnahme zum Aufnehmen eines Werkstückes (18).

7. Aufnahmemagazin (1) nach einem der vorhergehenden Ansprüche, **dadurch gekennzeichnet, dass** das erste Paar Montageschienen (2) und das zweite Paar Montageschienen (3) gemeinsam einen in einer Aufsicht umlaufenden einen inneren Auflagebereich umschließenden Rahmen bilden.

8. Aufnahmemagazin (1) nach einem der vorhergehenden Ansprüche, **dadurch gekennzeichnet, dass** die sämtliche Montageschienen (2, 3) gleich lang gebildet sind.

9. Aufnahmemagazin (1) nach einem der vorhergehenden Ansprüche, **dadurch gekennzeichnet, dass** es auf einem Rolltisch angeordnet ist, der insbesondere Mittel zum positionsbestimmten Anschließen an einer Werkstückbereitstellungsstation einer Bearbeitungsstation für die Bearbeitung von Werkstücken (15, 16, 17, 18) aufweist.

10. Bearbeitungsstation (20) für die, insbesondere spanabhebende, Bearbeitung von Werkstücken mit einer Werkstückbearbeitungsmaschine (21), einer Werkstückbereitstellungsstation (24) für das Positionieren einer Mehrzahl von sequentiell in der Werkstückbearbeitungsmaschine (21) zu bearbeitenden Werkstücken (15, 16, 17, 18) und/oder für das Positionieren von fertig bearbeiteten, aus der Werkstückbearbeitungsmaschine (21) entnommenen Werkstücken (15, 16, 17, 18), sowie mit einem Roboter zum automatischen Beladen der Werkstückbearbeitungsmaschine (21) mit in der Werkstückbereitstellungsstation (24) bereitgestellten Werkstücken (15, 16, 17, 18) und/oder zum Entladen der Werkstückbearbeitungsmaschine (21) und Abstellen der bearbeiteten Werkstücke (15, 16, 17, 18) in der Werkstückbereitstellungsstation (24), **gekennzeichnet durch** ein in der Werkstückbereitstellungsstation (24) vorgesehenes Aufnahmemagazin (1) nach einem der vorhergehenden Ansprüche.

11. Bearbeitungsstation (20) nach Anspruch 10, **dadurch gekennzeichnet, dass** der Roboter ein kollaborativer Roboter ist.

## Claims

1. A storage magazine (1) for storing a plurality of, in particular identical, workpieces (15, 16, 17, 18) in a workpiece machining process, comprising a flat support surface (4), a first pair of mounting rails (2) running parallel to one another, facing one another and mounted on the support surface along a first direction (x-direction)
and with partitioning elements which can be arranged in different positions in the area of the support surface (4) for geometrically defining and delimiting a plurality of storage compartments (14) for the workpieces (15, 16, 17, 18) on the support surface (4), a second pair of mounting rails (3) running parallel to one another, facing one another, and mounted on the storage surface (4) along a second direction (y-direction) perpendicular to the first direction (x-direction), wherein the partitioning elements are formed by a plurality of first strip- or rod-shaped boundary elements (5), which can be fixed to the two mounting rails (2) of the first pair of mounting rails (2) in a position-adjustable manner and with their longitudinal direction extending in the second direction (y-direction), as well as by a plurality of second strip- or rod-shaped boundary elements (7), which can be fixed in a positionally adjustable manner to the two mounting rails (3) of the second pair of mounting rails (3) with their longitudinal direction extending in the first direction (x-direction), wherein workpieces (18) can be inserted into receiving compartments (14) formed by the spaces between the boundary elements (5, 7), wherein the mounting rails (2) of the first pair of mounting rails (2), the mounting rails (3) of the second pair of mounting rails (3), the plurality of first boundary elements (5) and the plurality of second boundary elements (7) are designed and coordinated such that, irrespective of the arrangement and positioning of the plurality of first boundary elements (5) and the plurality of second boundary elements (7) on the respective associated pair of mounting rails (2, 3), the respective other plurality of second (7) or first (5) boundary elements can be arranged and secured on the respective associated pair of mounting rails (3, 2), wherein guide sections (6) are formed in the region of the longitudinal ends of the boundary elements (5, 7) and wherein retaining and guiding structures (9) are provided in the mounting rails (2, 3) retaining and guiding structures (9) are provided for receiving and guiding the guide sections (6) of the corresponding boundary elements (5, 7), wherein the retaining and guiding structures (9) in the mounting rails (2) of the first pair are provided in a first height position extending in a third direction (z-direction) along the first direction (x-direction) and the second direction (y-direction), and wherein the retaining and guiding structures (9) in the mounting rails (3) of the second pair are provided in a second height position of the third direction (z-direction) extending along the second direction (y-direction), wherein the first and second height positions are selected such that the first limiting elements (5) and the second limiting elements (7) are arranged in different positions along the third direction (z-direction) such that they rest on one another or do not touch one another and can thus be displaced independently of one another.

2. A storage magazine (1) according to claim 1, **characterised in that** first locking means (12) are provided in the retaining and guiding structures (9, 12) in the mounting rails (2, 3) at predetermined grid positions, for interacting with the second locking means (11) provided in the respective guide sections (6) of the limiting elements (5, 7) to position and secure the boundary elements (5, 7) at predetermined grid positions on the mounting rails (2, 3).

3. A storage magazine (1) according to one of the preceding claims, **characterised in that** the retaining and guiding structures (9, 12) in the mounting rails (2, 3) and the guide sections (6) of the boundary elements (5, 7) are designed such that the boundary elements (5, 7) can each be inserted into the retaining and guiding structures (9, 12) of the corresponding pair of mounting rails (2, 3) and removed from these retaining and guiding structures (9, 12), thereby allowing the number of the respective plurality of first (5) and second (7) boundary elements to be variably adjusted.

4. A storage magazine (1) according to one of the preceding claims, **characterised in that** the storage surface (4) is arranged on a base and can be tilted relative to the base about a tilting axis at an angle which is, in particular, selectably adjustable.

5. A storage magazine (1) according to claim 4, **characterised in that** the tilting axis is arranged parallel to a mounting rail (2, 3) and, in particular, in the region thereof.

6. A storage magazine (1) according to one of the preceding claims, **characterised by** insertable inserts (19) with a receptacle for holding a workpiece (18), which can be inserted into storage compartments (14) formed by the spaces between the boundary elements (5, 7).

7. A storage magazine (1) according to one of the preceding claims, **characterised in that** the first pair of mounting rails (2) and the second pair of mounting rails (3) together form a frame which, viewed from above, encircles an inner support area.

8. A storage magazine (1) according to one of the preceding claims, **characterised in that** all the mounting rails (2, 3) are of equal length.

9. A storage magazine (1) according to one of the preceding claims, **characterised in that** it is arranged on a roller table which, in particular, comprises means for connecting it in a position-determined manner to a workpiece supply station of a machining station for machining workpieces (15, 16, 17, 18).

10. Machining station (20) for the machining, in particular the cutting, of workpieces, comprising a workpiece machining centre (21), a workpiece supply station (24) for positioning a plurality of workpieces (15, 16, 17, 18) and/or for positioning finished workpieces (15, 16, 17, 18), as well as a robot for automatically loading the workpiece machining centre (21) with workpieces (15, 16, 17, 18) and/or for unloading the workpiece machining centre (21) and depositing the machined workpieces (15, 16, 17, 18) in the workpiece supply station (24), **characterised by** a storage magazine (1) provided in the workpiece supply station (24) according to one of the preceding claims.

11. Machining station (20) according to claim 10, **characterised in that** the robot is a collaborative robot.

## Revendications

1. Magasin de stockage (1) destiné à stocker une pluralité de pièces à usiner (15, 16, 17, 18), en particulier identiques, dans un processus d'usinage de pièces, comprenant une surface d'appui plane (4), une première paire de rails de montage (2) s'étendant parallèlement l'un à l'autre, se faisant face et montés sur la surface d'appui selon une première direction (direction x)
et comportant des éléments de séparation pouvant être disposés dans différentes positions dans la zone de la surface d'appui (4) pour définir et délimiter géométriquement une pluralité de compartiments de stockage (14) pour les pièces (15, 16, 17, 18) sur la surface d'appui (4), une seconde paire de rails de montage (3) s'étendant parallèlement l'un à l'autre, se faisant face, et montés sur la surface de rangement (4) selon une deuxième direction (direction y) perpendiculaire à la première direction (direction x), les éléments de séparation étant formés par une pluralité de premiers éléments de délimitation en forme de bandes ou de tiges (5), qui peuvent être fixés aux deux rails de montage (2) de la première paire de rails de montage (2) de manière réglable en position et dont la direction longitudinale s'étend dans la deuxième direction (direction y), ainsi que par une pluralité de seconds éléments de délimitation (7) en forme de bandes ou de tiges, qui peuvent être fixés de manière réglable en position aux deux rails de montage (3) de la seconde paire de rails de montage (3) avec leur direction longitudinale s'étendant dans la première direction (direction x), les pièces à usiner (18) pouvant être insérées dans des compartiments de réception (14) formés par les espaces entre les éléments de délimitation (5, 7), les rails de montage (2) de la première paire de rails de montage (2), les rails de montage (3) de la seconde paire de rails de montage (3), la pluralité de premiers éléments de délimitation (5) et la pluralité de seconds éléments de délimitation (7) sont conçus et coordonnés de telle sorte que, indépendamment de la disposition et du positionnement de la pluralité de premiers éléments de délimitation (5) et de la pluralité de seconds éléments de délimitation (7) sur la paire de rails de montage (2, 3) respectivement associée, l'autre pluralité respective de seconds (7) ou de premiers (5) éléments de bordure puisse être disposée et fixée sur la paire de rails de montage (3, 2) respectivement associée, dans laquelle des sections de guidage (6) sont formées dans la zone des extrémités longitudinales des éléments de bordure (5, 7) et dans laquelle des structures de retenue et de guidage (9) sont prévues dans les rails de montage (2, 3) des structures de retenue et de guidage (9) sont prévues pour recevoir et guider les sections de guidage (6) des éléments de bordure correspondants (5, 7), les structures de retenue et de guidage (9) dans les rails de montage (2) de la première paire étant prévues dans une première position en hauteur s'étendant dans une troisième direction (direction z) le long de la première direction (direction x) et la deuxième direction (direction y), et dans lesquelles les structures de retenue et de guidage (9) dans les rails de montage (3) de la seconde paire sont prévues dans une deuxième position en hauteur de la troisième direction (direction z) s'étendant le long de la deuxième direction (direction y), les première et deuxième positions en hauteur étant choisies de telle sorte que les premiers éléments de butée (5) et les deuxièmes éléments de butée (7) soient disposés dans des positions différentes le long de la troisième direction (direction z) de manière à reposer les uns sur les autres ou à ne pas se toucher et à pouvoir ainsi être déplacés indépendamment les uns des autres.

2. Magasin de stockage (1) selon la revendication 1, **caractérisé en ce que** des premiers moyens de verrouillage (12) sont prévus dans les structures de retenue et de guidage (9, 12) des rails de montage (2, 3) à des positions de trame prédéterminées, pour coopérer avec les seconds moyens de verrouillage (11) prévus dans les sections de guidage respectives (6) des éléments de butée (5, 7) afin de positionner et de fixer les éléments de butée (5, 7) à des positions de trame prédéterminées sur les rails de montage (2, 3).

3. Magasin de stockage (1) selon l'une des revendications précédentes, **caractérisé en ce que** les structures de retenue et de guidage (9, 12) dans les rails de montage (2, 3) et les sections de guidage (6) des éléments de bordure (5, 7) sont conçues de telle sorte que les éléments de bordure (5, 7) puissent chacun être insérés dans les structures de retenue et de guidage (9, 12) de la paire correspondante de rails de montage (2, 3) et retirés de ces structures de retenue et de guidage (9, 12), permettant ainsi d'ajuster de manière variable le nombre de la pluralité respective de premiers (5) et de seconds (7) éléments de bordure.

4. Magasin de stockage (1) selon l'une des revendications précédentes, **caractérisé en ce que** la surface de stockage (4) est disposée sur une base et peut être inclinée par rapport à la base autour d'un axe d'inclinaison selon un angle qui est, en particulier, réglable de manière sélective.

5. Magasin de stockage (1) selon la revendication 4, **caractérisé en ce que** l'axe d'inclinaison est disposé parallèlement à un rail de montage (2, 3) et, en particulier, dans la zone de celui-ci.

6. Magasin de stockage (1) selon l'une des revendications précédentes, **caractérisé par** des inserts (19) pouvant être insérés et comportant un logement pour maintenir une pièce (18), qui peuvent être insérés dans des compartiments de stockage (14) formés par les espaces entre les éléments de délimitation (5, 7).

7. Magasin de stockage (1) selon l'une des revendications précédentes, **caractérisé en ce que** la première paire de rails de montage (2) et la seconde paire de rails de montage (3) forment ensemble un cadre qui, vu de dessus, entoure une zone de support intérieure.

8. Magasin de stockage (1) selon l'une des revendications précédentes, **caractérisé en ce que** tous les rails de montage (2, 3) ont une longueur égale.

9. Magasin de stockage (1) selon l'une des revendications précédentes, **caractérisé en ce qu'**il est disposé sur une table à rouleaux qui, en particulier, comprend des moyens pour le relier de manière positionnée à un poste d'alimentation en pièces d'une station d'usinage destinée à l'usinage de pièces (15, 16, 17, 18).

10. Station d'usinage (20) pour l'usinage, en particulier la découpe, de pièces, comprenant une machine d'usinage de pièces (21), un poste d'alimentation en pièces (24) pour positionner une pluralité de pièces (15, 16, 17, 18) et/ou pour positionner des pièces finies (15, 16, 17, 18), ainsi qu'un robot destiné à charger automatiquement la machine d'usinage de pièces (21) avec des pièces (15, 16, 17, 18) et/ou à décharger la machine d'usinage de pièces (21) et à déposer les pièces usinées (15, 16, 17, 18) dans la station d'alimentation en pièces (24), **caractérisée par** un magasin de stockage (1) prévu dans la station d'alimentation en pièces (24) selon l'une des revendications précédentes.

11. Station d'usinage (20) selon la revendication 10, **caractérisée en ce que** le robot est un robot collaboratif.
